# EUROPEAN PATENT APPLICATION

(11) **EP 4 716 294 A1**
(43) Date of publication of application: **25.03.2026**
(21) Application number: 24848243.2
(22) Date of filing: 29.07.2024
(51) Int. Cl.: H04W 28/18

(54) **TRANSMISSION PARAMETER SWITCHING METHOD AND SYSTEM, AND RELATED APPARATUS**

(30) Priority: 31.07.2023 CN 202310963643
(71) Applicant: Huawei Technologies Co., Ltd., Shenzhen, Guangdong 518129 (CN)
(72) Inventor: XIAO, Houfei, Shenzhen, Guangdong 518129 (CN); JIANG, Jian, Shenzhen, Guangdong 518129 (CN); MENG, Meng, Shenzhen, Guangdong 518129 (CN); ZHOU, Ming, Shenzhen, Guangdong 518129 (CN)
(74) Representative: Gill Jennings & Every LLP
(86) International application number: PCT/CN2024/108297
(87) International publication number: WO 2025/026288

(57) **Abstract**

A transmission parameter switching method and system, and a related apparatus are provided. In the method, a STA may determine a target transmission parameter based on transmission information delivered by an AP and one or more of a current service scenario, a current traffic feature, a current channel state, and current instant messaging performance of the STA. Power consumption of transmitting data by the STA based on the target transmission parameter is lower than power consumption of transmitting data by the STA based on current transmission parameter. Implementing the technical solutions provided in this application can reduce power consumption of the STA.

## Description

This application claims priority to Chinese Patent Application No. 202310963643.5, filed with the China National Intellectual Property Administration on July 31, 2023 and entitled "TRANSMISSION PARAMETER SWITCHING METHOD AND SYSTEM, AND RELATED APPARATUS", which is incorporated herein by reference in its entirety.

### TECHNICAL FIELD

This application relates to the field of short-range wireless communication technologies, and in particular, to a transmission parameter switching method and system, and a related apparatus.

### BACKGROUND

Currently, an electronic device (for example, a mobile phone) may establish a wireless fidelity (wireless fidelity, Wi-Fi) connection to another electronic device (for example, a router or a tablet computer), and may transmit data through the Wi-Fi connection. Usually, when the electronic device establishes the Wi-Fi connection to the another electronic device, the electronic device and the another electronic device negotiate to use a high transmission parameter (for example, a high stream quantity (for example, four antennas or two antennas) or a high bandwidth (for example, 160 MHz or 80 MHz)) to transmit data. In this way, the electronic device may transmit data at a high rate through the Wi-Fi connection.

However, using the high transmission parameter by the electronic device causes an increase in power consumption. When the electronic device transmits the data through the Wi-Fi connection, how to reduce power consumption without affecting communication quality is an urgent problem to be resolved.

### SUMMARY

This application provides a transmission parameter switching method and system, and a related apparatus. According to the method, when transmitting data through a Wi-Fi connection, an electronic device may switch a transmission parameter to reduce power consumption without affecting communication quality.

According to a first aspect, this application provides a transmission parameter switching method. The method may be applied to a first electronic device, and the method may include: after the first electronic device establishes a wireless fidelity Wi-Fi connection to a second electronic device, the first electronic device receives, based on a first transmission parameter, transmission information sent by the second electronic device, where the transmission information includes reference information or a first reference transmission parameter, the reference information includes one or more of a service scenario, a traffic feature, a channel status, and instant messaging performance between the second electronic device and the first electronic device, and the first reference transmission parameter includes a transmission parameter determined by the second electronic device based on the reference information; the first electronic device determines a second transmission parameter based on the transmission information and sensed information of the first electronic device, where the sensed information includes one or more of a service scenario, a traffic feature, a channel status, and instant messaging performance of the first electronic device, and a device status of the first electronic device; the first electronic device sends the second transmission parameter to the second electronic device; and the first electronic device sends data to the second electronic device based on the second transmission parameter after receiving an acknowledgement message of the second electronic device, where the acknowledgement message indicates that the second electronic device successfully receives the second transmission parameter.

The first transmission parameter includes a first bandwidth value, and/or a first antenna quantity, and/or a first modulation and coding scheme MCS; and the second transmission parameter includes a second bandwidth value, and/or a second antenna quantity, and/or a second MCS.

The second bandwidth value is less than the first bandwidth value, and/or the second antenna quantity is less than the first antenna quantity, and/or an order of the second MCS is less than an order of the first MCS.

In this way, according to the transmission parameter switching method provided in the first aspect, the first electronic device (for example, a STA) may determine a low-power transmission parameter based on a reference transmission parameter that is determined by the second electronic device (for example, an AP) based on a service scenario, a traffic feature, a channel status, and instant messaging performance in the second electronic device and that is delivered by the second electronic device, or reference information, such as a service scenario, a traffic feature, a channel status, and instant messaging performance in the second electronic device, delivered by the second electronic device. The first electronic device may select a proper low-power transmission parameter more accurately based on sensed information of two ends (namely, information such as a service scenario, a traffic feature, a channel status, and instant messaging performance that are sensed by each of the second electronic device and the first electronic device). In this way, the first electronic device can implement low-power transmission based on two ends.

In a possible implementation, the transmission information may be the first reference transmission parameter, and that the first electronic device determines the second transmission parameter based on the transmission information and the sensed information of the first electronic device includes: The first electronic device determines a to-be-selected transmission parameter based on the sensed information; and the first electronic device determines the second transmission parameter based on the first reference transmission parameter and the to-be-selected transmission parameter. In this way, the first electronic device can determine the second transmission parameter based on the reference transmission parameter provided by the second electronic device.

In a possible implementation, the transmission information may be the reference information, and the first electronic device determines the second transmission parameter based on the transmission information and the sensed information of the first electronic device may include: The first electronic device determines a second reference transmission parameter based on the transmission information; the first electronic device determines a to-be-selected transmission parameter based on the sensed information; and the first electronic device determines the second transmission parameter based on the second reference transmission parameter and the to-be-selected transmission parameter. In this way, the first electronic device can determine a reference transmission parameter, namely, the second transmission parameter, based on the reference information in the second electronic device; and determine the second transmission parameter based on the second reference transmission parameter.

In a possible implementation, that the first electronic device determines the to-be-selected transmission parameter based on the sensed information may include: when the service scenario in the sensed information is a medium-throughput service, the first electronic device determines that in the to-be-selected transmission parameter, a third bandwidth value is a first value, and/or a third antenna quantity is a second value, and/or an order of a third MCS is a third value; or when the service scenario in the sensed information is a low-throughput service, the first electronic device determines that in the to-be-selected transmission parameter, a third bandwidth value is a fourth value, and/or a third antenna quantity is a fifth value, and/or an order of a third MCS is a sixth value; or when the service scenario in the sensed information is an extremely low-throughput service, the first electronic device determines that in the to-be-selected transmission parameter, a third bandwidth value is a seventh value, and/or a third antenna quantity is an eighth value, and/or an order of a third MCS is a ninth value, where the seventh value is less than or equal to the fourth value, the fourth value is less than or equal to the first value, the eighth value is less than or equal to the fifth value, the fifth value is less than or equal to the second value, the ninth value is less than or equal to the sixth value, and the sixth value is less than or equal to the third value. In this way, the first electronic device can determine the to-be-selected transmission parameter based on the service scenario. Different to-be-selected transmission parameters may be determined in different service scenarios.

In a possible implementation, before the first electronic device determines the to-be-selected transmission parameter based on the sensed information, the method may further include: when a throughput of a current service in the first electronic device is less than a first throughput threshold and greater than a second throughput threshold, or a throughput rate of a current service is less than a first throughput rate threshold and greater than a second throughput rate threshold, the first electronic device determines that the current service is a medium-throughput service; when the throughput of the current service is less than the second throughput threshold and greater than a third throughput threshold, or the throughput rate of the current service is less than the second throughput rate threshold and greater than a third throughput rate threshold, the first electronic device determines that the current service is a low-throughput service; and when a data throughput of the current service is less than the third throughput threshold, or the throughput rate is less than the third throughput rate threshold, the first electronic device determines that the current service is an extremely low-throughput service. In this way, the first electronic device can determine a specific type or scenario of the current service based on the data throughput or the throughput rate of the current service.

In a possible implementation, larger received signal strength RSSI of the first electronic device leads to a lower power consumption specification of the to-be-selected transmission parameter; and/or a larger signal-to-noise ratio SNR of the first electronic device leads to a lower power consumption specification of the to-be-selected transmission parameter; and/or a smaller packet loss rate PER of the first electronic device leads to a lower power consumption specification of the to-be-selected transmission parameter; and/or a smaller remaining power of the first electronic device leads to a lower power consumption specification of the to-be-selected transmission parameter; and/or a higher temperature of the first electronic device leads to a lower power consumption specification of the to-be-selected transmission parameter.

The lower power consumption specification of the to-be-selected transmission parameter includes: a smaller bandwidth value, and/or a smaller antenna quantity, and/or a lower order of an MCS in the to-be-selected transmission parameter.

In this way, the first electronic device can determine the power consumption specification of the to-be-selected transmission parameter based on a current received signal strength RSSI, and/or a current signal-to-noise ratio SNR, and/or a current packet loss rate PER, and/or a remaining power of the first electronic device.

In a possible implementation, when a fourth bandwidth value in the first reference transmission parameter is greater than the third bandwidth value in the to-be-selected transmission parameter, and/or a fourth antenna quantity in the first reference transmission parameter is greater than the third antenna quantity in the to-be-selected transmission parameter, and/or an order of a fourth MCS in the first reference transmission parameter is greater than the order of the third MCS in the to-be-selected transmission parameter, the second bandwidth value in the second transmission parameter is equal to the fourth bandwidth value, and/or the second antenna quantity is equal to the fourth antenna quantity, and the order of the second MCS is equal to the order of the fourth MCS; and when the fourth bandwidth value is less than the third bandwidth value, and/or the fourth antenna quantity is less than the third antenna quantity, and/or the order of the fourth MCS is less than the order of the third MCS, the second bandwidth value in the second transmission parameter is equal to the third bandwidth value, and/or the second antenna quantity is equal to the third antenna quantity, and the order of the second MCS is equal to the order of the third MCS. In this way, the first electronic device can determine the second transmission parameter based on the first reference transmission parameter and the to-be-selected transmission parameter.

In a possible implementation, when a fifth bandwidth value in the second reference transmission parameter is greater than the third bandwidth value in the to-be-selected transmission parameter, and/or a fifth antenna quantity in the first reference transmission parameter is greater than the third antenna quantity in the to-be-selected transmission parameter, and/or an order of a fifth MCS in the first reference transmission parameter is greater than the order of the third MCS in the to-be-selected transmission parameter, the second bandwidth value in the second transmission parameter is equal to the fifth bandwidth value, and/or the second antenna quantity is equal to the fifth antenna quantity, and the order of the second MCS is equal to the order of the fifth MCS; and when the fifth bandwidth value is less than the third bandwidth value, and/or the fifth antenna quantity is less than the third antenna quantity, and/or the order of the fifth MCS is less than the order of the third MCS, the second bandwidth value in the second transmission parameter is equal to the third bandwidth value, and/or the second antenna quantity is equal to the third antenna quantity, and the order of the second MCS is equal to the order of the third MCS. In this way, the first electronic device can determine the second transmission parameter based on the second reference transmission parameter and the to-be-selected transmission parameter.

In a possible implementation, after receiving the acknowledgement message of the second electronic device, the method may further include: the first electronic device receives data sent by the second electronic device based on the second transmission parameter. In this way, the first electronic device can further receive the data based on the second transmission parameter.

According to a second aspect, a transmission parameter switching method is provided. The method may be applied to a second electronic device, and the method may include: after the second electronic device establishes a wireless fidelity Wi-Fi connection to a first electronic device, the second electronic device sends transmission information to the first electronic device based on a first transmission parameter, where the transmission information includes reference information or a first reference transmission parameter, the reference information includes one or more of a service scenario, a traffic feature, a channel status, and instant messaging performance between the second electronic device and the first electronic device, and the first reference transmission parameter includes a transmission parameter determined by the second electronic device based on the reference information; the second electronic device receives a second transmission parameter sent by the first electronic device, where the second transmission parameter is determined by the first electronic device based on the transmission information and sensed information of the first electronic device, and the sensed information includes one or more of a service scenario, a traffic feature, a channel status, and instant messaging performance of the first electronic device, and a device status of the first electronic device; the second electronic device sends an acknowledgement message to the first electronic device, where the acknowledgement message indicates that the second electronic device successfully receives the second transmission parameter; and the second electronic device sends data to the first electronic device based on the second transmission parameter.

The first transmission parameter includes a first bandwidth value, and/or a first antenna quantity, and/or a first modulation and coding scheme MCS; and the second transmission parameter includes a second bandwidth value, and/or a second antenna quantity, and/or a second MCS.

The second bandwidth value is less than the first bandwidth value, and/or the second antenna quantity is less than the first antenna quantity, and/or an order of the second MCS is less than an order of the first MCS.

In this way, according to the transmission parameter switching method provided in the second aspect, the second electronic device may send, to the first electronic device, a reference transmission parameter determined based on a service scenario, a traffic feature, a channel status, and instant messaging performance in the second electronic device, or reference information, such as a service scenario, a traffic feature, a channel status, and instant messaging performance in the second electronic device, delivered by the second electronic device. The first electronic device (for example, a STA) may determine a low-power transmission parameter based on the reference transmission parameter or the reference information delivered by the second electronic device (for example, an AP). The first electronic device may select a proper low-power transmission parameter more accurately based on sensed information of two ends (namely, information such as a service scenario, a traffic feature, a channel status, and instant messaging performance that are sensed by each of the second electronic device and the first electronic device). In this way, the first electronic device can implement low-power transmission based on two ends.

In a possible implementation, the transmission information is the first reference transmission parameter, the second transmission parameter is determined by the first electronic device based on the first reference transmission parameter and a to-be-selected transmission parameter, and the to-be-selected transmission parameter is determined by the first electronic device based on the sensed information. In this way, the first electronic device can determine the second transmission parameter based on the reference transmission parameter provided by the second electronic device.

In a possible implementation, the transmission information is the reference information, the second transmission parameter is determined by the first electronic device based on a second reference transmission parameter and a to-be-selected transmission parameter, the to-be-selected transmission parameter is determined by the first electronic device based on the sensed information, and the second reference transmission parameter is determined by the first electronic device based on the reference information. In this way, the first electronic device can determine a reference transmission parameter, namely, the second transmission parameter, based on the reference information in the second electronic device; and determine the second transmission parameter based on the second reference transmission parameter.

In a possible implementation, that the first electronic device determines the to-be-selected transmission parameter based on the sensed information may include: when the service scenario in the sensed information is a medium-throughput service, the first electronic device determines that in the to-be-selected transmission parameter, a third bandwidth value is a first value, and/or a third antenna quantity is a second value, and/or an order of a third MCS is a third value; or when the service scenario in the sensed information is a low-throughput service, the first electronic device determines that in the to-be-selected transmission parameter, a third bandwidth value is a fourth value, and/or a third antenna quantity is a fifth value, and/or an order of a third MCS is a sixth value; or when the service scenario in the sensed information is an extremely low-throughput service, the first electronic device determines that in the to-be-selected transmission parameter, a third bandwidth value is a seventh value, and/or a third antenna quantity is an eighth value, and/or an order of a third MCS is a ninth value, where the seventh value is less than or equal to the fourth value, the fourth value is less than or equal to the first value, the eighth value is less than or equal to the fifth value, the fifth value is less than or equal to the second value, the ninth value is less than or equal to the sixth value, and the sixth value is less than or equal to the third value. In this way, the first electronic device can determine the to-be-selected transmission parameter based on the service scenario. Different to-be-selected transmission parameters may be determined in different service scenarios.

In a possible implementation, before the first electronic device determines the to-be-selected transmission parameter based on the sensed information, the method may further include: when a throughput of a current service in the first electronic device is less than a first throughput threshold and greater than a second throughput threshold, or a throughput rate of a current service is less than a first throughput rate threshold and greater than a second throughput rate threshold, the current service is a medium-throughput service; when the throughput of the current service is less than the second throughput threshold and greater than a third throughput threshold, or the throughput rate of the current service is less than the second throughput rate threshold and greater than a third throughput rate threshold, the current service is a low-throughput service; and when a data throughput of the current service is less than the third throughput threshold, or the throughput rate is less than the third throughput rate threshold, the current service is an extremely low-throughput service. In this way, a specific type or scenario of the current service can be determined based on the data throughput or the throughput rate of the current service.

In a possible implementation, larger received signal strength RSSI of the first electronic device leads to a lower power consumption specification of the to-be-selected transmission parameter; and/or a larger signal-to-noise ratio SNR of the first electronic device leads to a lower power consumption specification of the to-be-selected transmission parameter; and/or a smaller packet loss rate PER of the first electronic device leads to a lower power consumption specification of the to-be-selected transmission parameter; and/or a smaller remaining power of the first electronic device leads to a lower power consumption specification of the to-be-selected transmission parameter; and/or a higher temperature of the first electronic device leads to a lower power consumption specification of the to-be-selected transmission parameter.

The lower power consumption specification of the to-be-selected transmission parameter includes: a smaller bandwidth value, and/or a smaller antenna quantity, and/or a lower order of an MCS in the to-be-selected transmission parameter.

In this way, the first electronic device can determine the power consumption specification of the to-be-selected transmission parameter based on a current received signal strength RSSI, and/or a current signal-to-noise ratio SNR, and/or a current packet loss rate PER, and/or a remaining power of the first electronic device.

In a possible implementation, when a fourth bandwidth value in the first reference transmission parameter is greater than the third bandwidth value in the to-be-selected transmission parameter, and/or a fourth antenna quantity in the first reference transmission parameter is greater than the third antenna quantity in the to-be-selected transmission parameter, and/or an order of a fourth MCS in the first reference transmission parameter is greater than the order of the third MCS in the to-be-selected transmission parameter, the second bandwidth value in the second transmission parameter is equal to the fourth bandwidth value, and/or the second antenna quantity is equal to the fourth antenna quantity, and the order of the second MCS is equal to the order of the fourth MCS; and when the fourth bandwidth value is less than the third bandwidth value, and/or the fourth antenna quantity is less than the third antenna quantity, and/or the order of the fourth MCS is less than the order of the third MCS, the second bandwidth value in the second transmission parameter is equal to the third bandwidth value, and/or the second antenna quantity is equal to the third antenna quantity, and the order of the second MCS is equal to the order of the third MCS. In this way, the first electronic device can determine the second transmission parameter based on the first reference transmission parameter and the to-be-selected transmission parameter.

In a possible implementation, when a fifth bandwidth value in the second reference transmission parameter is greater than the third bandwidth value in the to-be-selected transmission parameter, and/or a fifth antenna quantity in the first reference transmission parameter is greater than the third antenna quantity in the to-be-selected transmission parameter, and/or an order of a fifth MCS in the first reference transmission parameter is greater than the order of the third MCS in the to-be-selected transmission parameter, the second bandwidth value in the second transmission parameter is equal to the fifth bandwidth value, and/or the second antenna quantity is equal to the fifth antenna quantity, and the order of the second MCS is equal to the order of the fifth MCS; and when the fifth bandwidth value is less than the third bandwidth value, and/or the fifth antenna quantity is less than the third antenna quantity, and/or the order of the fifth MCS is less than the order of the third MCS, the second bandwidth value in the second transmission parameter is equal to the third bandwidth value, and/or the second antenna quantity is equal to the third antenna quantity, and the order of the second MCS is equal to the order of the third MCS. In this way, the first electronic device can determine the second transmission parameter based on the second reference transmission parameter and the to-be-selected transmission parameter.

In a possible implementation, after the second electronic device sends the acknowledgement message to the first electronic device, the method may further include: the second electronic device receives data sent by the first electronic device based on the second transmission parameter. In this way, the second electronic device can further receive the data based on the second transmission parameter.

According to a third aspect, a transmission parameter switching system is provided. The system may include a first electronic device and a second electronic device.

After the second electronic device establishes a wireless fidelity Wi-Fi connection to the first electronic device, the second electronic device may be configured to send transmission information to the first electronic device based on a first transmission parameter, where the transmission information includes reference information or a first reference transmission parameter, the reference information includes one or more of a service scenario, a traffic feature, a channel status, and instant messaging performance between the second electronic device and the first electronic device, and the first reference transmission parameter includes a transmission parameter determined by the second electronic device based on the reference information.

The first electronic device may be configured to: receive, based on the first transmission parameter, the transmission information sent by the second electronic device, and determine a second transmission parameter based on the transmission information and sensed information of the first electronic device, where the sensed information includes one or more of a service scenario, a traffic feature, a channel status, and instant messaging performance of the first electronic device, and a device status of the first electronic device.

The first electronic device may be configured to send the second transmission parameter to the second electronic device.

The second electronic device may be configured to send an acknowledgement message to the first electronic device after receiving the second transmission parameter sent by the first electronic device, where the acknowledgement message indicates that the second electronic device successfully receives the second transmission parameter.

The first electronic device may be configured to send data to the second electronic device based on the second transmission parameter.

The first transmission parameter includes a first bandwidth value, and/or a first antenna quantity, and/or a first modulation and coding scheme MCS; and the second transmission parameter includes a second bandwidth value, and/or a second antenna quantity, and/or a second MCS.

The second bandwidth value is less than the first bandwidth value, and/or the second antenna quantity is less than the first antenna quantity, and/or an order of the second MCS is less than an order of the first MCS.

In this way, according to the transmission parameter switching system provided in the third aspect, the second electronic device may send, to the first electronic device, a reference transmission parameter determined based on a service scenario, a traffic feature, a channel status, and instant messaging performance in the second electronic device, or reference information, such as a service scenario, a traffic feature, a channel status, and instant messaging performance in the second electronic device, delivered by the second electronic device. The first electronic device (for example, a STA) may determine a low-power transmission parameter based on the reference transmission parameter or the reference information delivered by the second electronic device (for example, an AP). The first electronic device may select a proper low-power transmission parameter more accurately based on sensed information of two ends (namely, information such as a service scenario, a traffic feature, a channel status, and instant messaging performance that are sensed by each of the second electronic device and the first electronic device). In this way, the first electronic device can implement low-power transmission based on two ends.

In a possible implementation, the transmission information may be the first reference transmission parameter, and the first electronic device may be further configured to determine a to-be-selected transmission parameter based on the sensed information; and the first electronic device determines the second transmission parameter based on the first reference transmission parameter and the to-be-selected transmission parameter. In this way, the first electronic device can determine the second transmission parameter based on the reference transmission parameter provided by the second electronic device.

In a possible implementation, the transmission information may be reference information, and the first electronic device may be further configured to determine a second reference transmission parameter based on the transmission information; the first electronic device determines a to-be-selected transmission parameter based on the sensed information; and the first electronic device determines the second transmission parameter based on the second reference transmission parameter and the to-be-selected transmission parameter. In this way, the first electronic device can determine a reference transmission parameter, namely, the second transmission parameter, based on the reference information in the second electronic device; and determine the second transmission parameter based on the second reference transmission parameter.

In a possible implementation, the first electronic device may be further configured to: when the service scenario in the sensed information is a medium-throughput service, determine that in the to-be-selected transmission parameter, a third bandwidth value is a first value, and/or a third antenna quantity is a second value, and/or an order of a third MCS is a third value; or when the service scenario in the sensed information is a low-throughput service, determine that in the to-be-selected transmission parameter, a third bandwidth value is a fourth value, and/or a third antenna quantity is a fifth value, and/or an order of a third MCS is a sixth value; or when the service scenario in the sensed information is an extremely low-throughput service, determine that in the to-be-selected transmission parameter, a third bandwidth value is a seventh value, and/or a third antenna quantity is an eighth value, and/or an order of a third MCS is a ninth value, where the seventh value is less than or equal to the fourth value, the fourth value is less than or equal to the first value, the eighth value is less than or equal to the fifth value, the fifth value is less than or equal to the second value, the ninth value is less than or equal to the sixth value, and the sixth value is less than or equal to the third value. In this way, the first electronic device can determine the to-be-selected transmission parameter based on the service scenario. Different to-be-selected transmission parameters may be determined in different service scenarios.

In a possible implementation, the first electronic device may be further configured to: when a throughput of a current service in the first electronic device is less than a first throughput threshold and greater than a second throughput threshold, or a throughput rate of a current service is less than a first throughput rate threshold and greater than a second throughput rate threshold, determine that the current service is a medium-throughput service; when the throughput of the current service is less than the second throughput threshold and greater than a third throughput threshold, or the throughput rate of the current service is less than the second throughput rate threshold and greater than a third throughput rate threshold, determine that the current service is a low-throughput service; and when a data throughput of the current service is less than the third throughput threshold, or the throughput rate is less than the third throughput rate threshold, determine that the current service is an extremely low-throughput service. In this way, the first electronic device can determine a specific type or scenario of the current service based on the data throughput or the throughput rate of the current service.

In a possible implementation, larger received signal strength RSSI of the first electronic device leads to a lower power consumption specification of the to-be-selected transmission parameter; and/or a larger signal-to-noise ratio SNR of the first electronic device leads to a lower power consumption specification of the to-be-selected transmission parameter; and/or a smaller packet loss rate PER of the first electronic device leads to a lower power consumption specification of the to-be-selected transmission parameter; and/or a smaller remaining power of the first electronic device leads to a lower power consumption specification of the to-be-selected transmission parameter; and/or a higher temperature of the first electronic device leads to a lower power consumption specification of the to-be-selected transmission parameter.

The lower power consumption specification of the to-be-selected transmission parameter includes: a smaller bandwidth value, and/or a smaller antenna quantity, and/or a lower order of an MCS in the to-be-selected transmission parameter.

In this way, the first electronic device can determine the power consumption specification of the to-be-selected transmission parameter based on a current received signal strength RSSI, and/or a current signal-to-noise ratio SNR, and/or a current packet loss rate PER, and/or a remaining power of the first electronic device.

In a possible implementation, when a fourth bandwidth value in the first reference transmission parameter is greater than the third bandwidth value in the to-be-selected transmission parameter, and/or a fourth antenna quantity in the first reference transmission parameter is greater than the third antenna quantity in the to-be-selected transmission parameter, and/or an order of a fourth MCS in the first reference transmission parameter is greater than the order of the third MCS in the to-be-selected transmission parameter, the second bandwidth value in the second transmission parameter is equal to the fourth bandwidth value, and/or the second antenna quantity is equal to the fourth antenna quantity, and the order of the second MCS is equal to the order of the fourth MCS; and when the fourth bandwidth value is less than the third bandwidth value, and/or the fourth antenna quantity is less than the third antenna quantity, and/or the order of the fourth MCS is less than the order of the third MCS, the second bandwidth value in the second transmission parameter is equal to the third bandwidth value, and/or the second antenna quantity is equal to the third antenna quantity, and the order of the second MCS is equal to the order of the third MCS. In this way, the first electronic device can determine the second transmission parameter based on the first reference transmission parameter and the to-be-selected transmission parameter.

In a possible implementation, when a fifth bandwidth value in the second reference transmission parameter is greater than the third bandwidth value in the to-be-selected transmission parameter, and/or a fifth antenna quantity in the first reference transmission parameter is greater than the third antenna quantity in the to-be-selected transmission parameter, and/or an order of a fifth MCS in the first reference transmission parameter is greater than the order of the third MCS in the to-be-selected transmission parameter, the second bandwidth value in the second transmission parameter is equal to the fifth bandwidth value, and/or the second antenna quantity is equal to the fifth antenna quantity, and the order of the second MCS is equal to the order of the fifth MCS; and when the fifth bandwidth value is less than the third bandwidth value, and/or the fifth antenna quantity is less than the third antenna quantity, and/or the order of the fifth MCS is less than the order of the third MCS, the second bandwidth value in the second transmission parameter is equal to the third bandwidth value, and/or the second antenna quantity is equal to the third antenna quantity, and the order of the second MCS is equal to the order of the third MCS. In this way, the first electronic device can determine the second transmission parameter based on the second reference transmission parameter and the to-be-selected transmission parameter.

In a possible implementation, the first electronic device may be further configured to receive data sent by the second electronic device based on the second transmission parameter. In this way, the first electronic device can further receive the data based on the second transmission parameter.

In a possible implementation, the second electronic device may be further configured to send data to the first electronic device based on the second transmission parameter. In this way, the second electronic device can further send the data based on the second transmission parameter.

In a possible implementation, the second electronic device may be further configured to receive data sent by the first electronic device based on the second transmission parameter. In this way, the second electronic device can further receive the data based on the second transmission parameter.

According to a fourth aspect, a first electronic device is provided. The first electronic device may include one or more processors, one or more memories, a transceiver, and a wireless fidelity Wi-Fi chip. The transceiver, the Wi-Fi chip, and the one or more memories are coupled to the one or more processors, the one or more memories are configured to store computer program code, the computer program code includes computer instructions, and when the one or more processors execute the computer instructions, the first electronic device is enabled to perform the method in any possible implementation of the first aspect.

According to a fifth aspect, a second electronic device is provided. The second electronic device may include one or more processors, one or more memories, a transceiver, and a wireless fidelity Wi-Fi chip. The transceiver, the Wi-Fi chip, and the one or more memories are coupled to the one or more processors, the one or more memories are configured to store computer program code, the computer program code includes computer instructions, and when the one or more processors execute the computer instructions, the second electronic device is enabled to perform the method in any possible implementation of the second aspect.

According to a sixth aspect, a computer-readable storage medium is provided. The computer-readable storage medium stores instructions, and when the instructions run on a computer, the computer is enabled to perform the method in any possible implementation of any one of the foregoing aspects.

According to a seventh aspect, a chip is provided, applied to a first electronic device or a second electronic device, and including a processing circuit and an interface circuit. The interface circuit is configured to receive code instructions and transmit the code instructions to the processing circuit, and the processing circuit is configured to run the code instructions to perform the method according to any possible implementation of the first aspect, or perform the method according to any possible implementation of the second aspect.

According to an eighth aspect, a computer program product is provided. When the computer program product is run on a computer, the computer is enabled to perform the method according to any possible implementation of any one of the foregoing aspects.

### BRIEF DESCRIPTION OF DRAWINGS

FIG. 1 is a diagram of a system according to an embodiment of this application;
FIG. 2 is a diagram of proportions of different Wi-Fi traffic usage scenarios according to an embodiment of this application;
FIG. 3A and FIG. 3B are diagrams of interaction and transmission of a group of SMPS frames according to an embodiment of this application;
FIG. 4 is a diagram of a scenario in which a STA device unilaterally determines a transmission parameter according to an embodiment of this application;
FIG. 5 is a schematic flowchart of a transmission parameter switching method according to an embodiment of this application;
FIG. 6 is a diagram of a scenario in which two devices collaboratively determine a transmission parameter according to an embodiment of this application;
FIG. 7 is a schematic flowchart of a transmission parameter switching method according to an embodiment of this application;
FIG. 8 is a diagram of a structure of an electronic device 100 according to an embodiment of this application; and
FIG. 9 is a diagram of a structure of an electronic device 200 according to an embodiment of this application.

### DESCRIPTION OF EMBODIMENTS

Terms used in the following embodiments of this application are merely intended to describe specific embodiments, but are not intended to limit this application. The terms "one", "a", "an", "the", and "this" of singular forms used in this specification and the appended claims of this application are also intended to include plural forms, unless otherwise specified in the context clearly. It should also be understood that the term "and/or" used in this application means and includes any or all possible combinations of one or more listed items.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

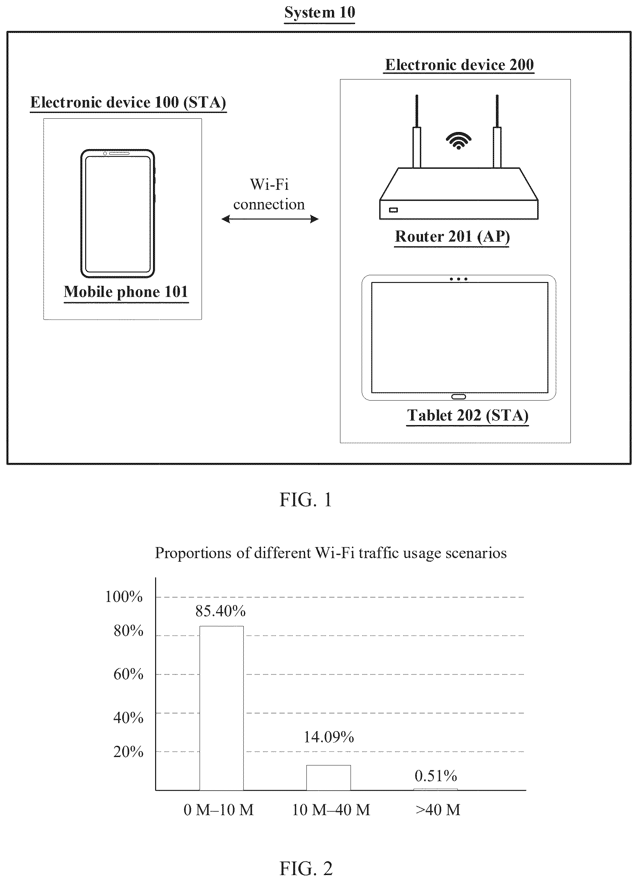

FIG. 1 is a diagram of a system architecture according to an embodiment of this application.

As shown in FIG. 1, a system 10 may include at least two devices that can establish a Wi-Fi connection, for example, an electronic device 100 and an electronic device 200. The electronic device 100 and the electronic device 200 may respectively serve as a workstation (station, STA) in a Wi-Fi network and an access point (access point, AP) in the Wi-Fi network. For example, the electronic device 100 may be a mobile phone 101, and the electronic device 200 may be a router 201. The mobile phone 101 may serve as the STA in the Wi-Fi network. The router 201 may serve as the AP in the Wi-Fi network. The router 201 may convert a wired network signal or a signal received through GPRS, 3G, 4G, or 5G into a Wi-Fi signal, and send the Wi-Fi signal to the mobile phone 101. The mobile phone 101 may establish a Wi-Fi connection to the router 201.

Optionally, the electronic device 100 and the electronic device 200 may be two mobile devices. For example, the electronic device 100 may be a mobile phone 101, and the electronic device 200 may be a tablet 202. The tablet 202 has a Wi-Fi hotspot function, and may convert a signal received through GPRS, 3G, 4G, or 5G into a Wi-Fi signal, and send the Wi-Fi signal to the mobile phone 101. Optionally, the mobile phone 101 may establish a Wi-Fi peer-to-peer (peer-to-peer, P2P) connection to the tablet 202. In some examples, the Wi-Fi P2P connection may be referred to as Wi-Fi direct (Wi-Fi direct). A Wi-Fi chip in the tablet 202 may alternatively be in an AP mode, to provide a Wi-Fi hotspot for the mobile phone 101. Because the tablet 202 may also be connected to an existing Wi-Fi network, in some examples, the tablet 202 may also be referred to as a STA.

In this embodiment of this application, the electronic device 100 is a device that may access the Wi-Fi network, for example, a mobile phone, a tablet computer, a personal digital assistant (personal digital assistant, PDA), or a vehicle-mounted computer. The electronic device 200 is a device that may provide a Wi-Fi signal (or may be referred to as a device that may provide a Wi-Fi network), for example, a router, a mobile phone, a tablet computer, or a notebook computer. Specific devices that are the electronic device 100 and the electronic device 200 are not limited in this embodiment of this application.

An example in which the electronic device 100 is the mobile phone 101 and the electronic device is the router 201 is used for description below. It may be understood that the following solutions are also applicable to a scenario in which the electronic device 100 is the mobile phone 101 and the electronic device 200 is the tablet 202.

Usually, when the STA establishes a connection to the AP, the STA and the AP negotiate to use a high transmission parameter for communication interaction (for example, data transmission), for example, a high stream quantity (for example, four antennas or two antennas), a high bandwidth (for example, 160 MHz or 80 MHz), and a higher-order modulation and coding scheme (modulation and coding scheme, MCS) (for example, 1024 quadrature amplitude modulation (quadrature amplitude modulation, QAM)). However, FIG. 2 is a diagram of proportions of different Wi-Fi traffic usage scenarios. In a current mobile phone application scenario, a scenario in which Wi-Fi traffic is less than 10 Mbps accounts for 85%, and a scenario in which Wi-Fi traffic is less than 40 Mbps accounts for more than 99%. In other words, in an actual scenario, when the mobile phone transmits data, the mobile phone does not need to use a high transmission parameter such as a bandwidth of 160 MHz or 80 MHz.

A design of a current Wi-Fi protocol mainly relates to high-throughput performance. When the STA and the AP negotiate about the transmission parameter based on the current Wi-Fi protocol, a large bandwidth and a plurality of antennas are usually selected. Currently, a Wi-Fi 6 protocol may support a maximum bandwidth of 160 Mbps. An electronic device that supports the Wi-Fi 6 protocol is usually equipped with two antennas.

When the STA selects the large bandwidth, a higher analog-to-digital converter (analog-to-digital converter, ADC) sampling rate, a larger fast Fourier transform size (fast Fourier transform size, FFT size), and a higher baseband operating clock need to be used. Consequently, power consumption in the STA is linearly increased. When the STA selects a plurality of antennas to transmit data, each time a transmit antenna or a receive antenna is added, a corresponding transmit channel or receive channel needs to be added. Consequently, power consumption of the STA is multiplied.

From the diagram of proportions of different Wi-Fi traffic usage scenarios in FIG. 2, it can be learned that the STA does not need to select a high transmission parameter in some scenarios. The STA may select the transmission parameter based on different service scenarios. In this way, transmission performance of the STA can be ensured, and power consumption of the STA can be reduced.

To reduce power consumption of the STA, the protocol defines a power save (spatial multiplexing power save, SMPS or SM power save for short) mode in a case of a plurality of antennas. The SMPS mode can be a static mode or a dynamic mode. In a process in which the STA and the AP interact, the STA may indicate the static mode or the dynamic mode.

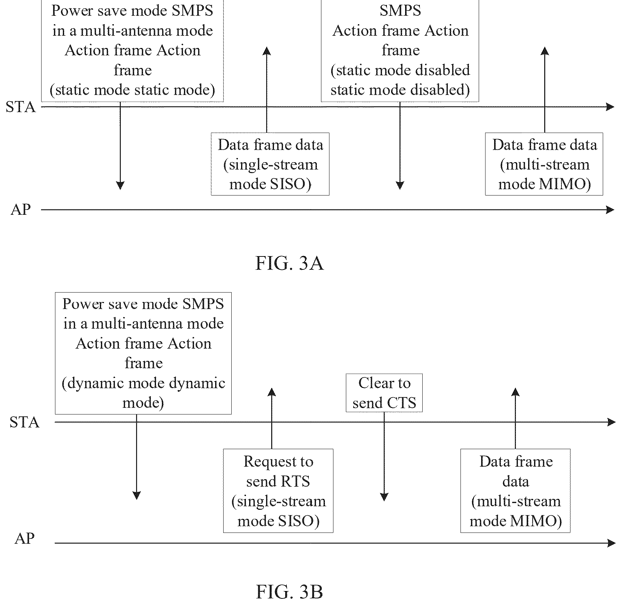

FIG. 3A is a diagram of an example in which a STA interacts with an AP in a static mode in an SMPS mode. As shown in FIG. 3A, the STA sends an action frame in the SMPS mode to the AP and indicates that the static mode is used. In this case, in subsequent interaction between the STA and the AP, all frames are transmitted through a single antenna. After the STA sends the action frame in the SMPS mode to the AP and indicates that the static mode is disabled (disabled), when the STA interacts with the AP, all frames are restored to be transmitted through a plurality of antennas.

FIG. 3B is a diagram of an example in which a STA interacts with an AP in a dynamic mode in an SMPS mode. As shown in FIG. 3B, the STA sends an action frame in the SMPS mode to the AP and indicates that the dynamic mode is used. In this case, a first frame exchanged between the STA and the AP is transmitted through a single antenna. After the first frame is transmitted, a subsequent frame is transmitted through a plurality of antennas.

When the STA is in the dynamic mode in the SMPS mode, after the STA sends an action frame in the dynamic mode to the AP, a single-stream mode (that is, data is transmitted through a single antenna) is used in a downlink data frame fed back by the AP. If the AP wants to switch the STA from the single-stream mode back to a multi-stream mode (data is transmitted through a plurality of antennas), the AP needs to send a request to send (request to send, RTS) frame to the STA. After the AP receives a clear to send (clear to send, CTS) frame sent by the STA, the AP actively switches from the single-stream mode to the multi-stream mode when sending a data frame to the STA. The STA may also receive the data frame in the multi-stream mode. Both the RTS frame and the CTS frame are unicast frames. For specific formats of the RTS frame and the CTS frame, refer to descriptions in an existing protocol. Details are not described herein again.

The SMPS mode involves only switching between a single antenna and a plurality of antennas. The protocol further defines an operating mode indication (operating mode indication, OMI). The STA may send the OMI to the AP, to indicate the AP to change a send mode or a receive mode. The OMI includes a bandwidth field and an antenna quantity field. The bandwidth field may indicate a target bandwidth to which the AP switches. The antenna quantity field indicates a quantity of target antennas to which the AP switches. The OMI may exist in a data frame sent by the STA to the AP, or may exist in a management frame.

For details about the SMPS and the OMI, refer to descriptions in an existing Wi-Fi related protocol. Details are not described herein again.

The SMPS mode in the existing protocol relates only to antenna switching, and the OMI relates only to antenna switching and bandwidth switching. The SMPS mode and the OMI do not relate to MCS switching, and do not relate to how to dynamically adjust a working mode of a Wi-Fi chip in the STA based on an actual service scenario in the STA and/or the AP without affecting communication quality of an actual service, that is, dynamically adjust a transmission parameter between the STA and the AP.

To avoid affecting communication quality of an actual service and reduce power consumption of a STA, an embodiment of this application provides a transmission parameter switching method. The method may include: A STA selects a new transmission parameter based on a service scenario, a traffic feature, a channel status, instant messaging performance of the STA, and a device status of the STA, or transmission information sent between the STA and an AP based on the service scenario, the traffic feature, the channel status, the instant messaging performance of the STA, and the device status of the STA; and the STA switches to the new transmission parameter, and transmits data to the AP based on the new transmission parameter. A transmission parameter of the STA is an initial transmission parameter. Power consumption of receiving and sending data by the STA based on the new transmission parameter is less than power consumption of receiving and sending data by the STA based on the initial transmission parameter.

The transmission parameter switching method provided in this embodiment of this application may include the following several scenarios.

### Scenario 1: A STA independently determines a transmission parameter.

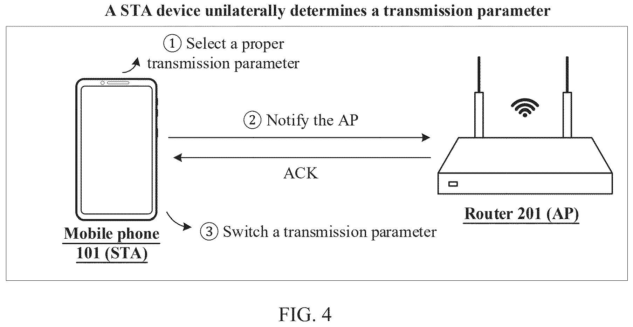

FIG. 4 is a diagram of a scenario in which a STA device unilaterally determines a transmission parameter according to an embodiment of this application. As shown in FIG. 4, that the STA device unilaterally determines the transmission parameter may include the following steps.

### ① The STA selects a proper transmission parameter.

The STA may select the proper transmission parameter based on a service scenario and a traffic feature of the STA, a channel status, instant messaging performance of the STA, and a device status of the STA.

The service scenario and the traffic feature of the STA may include one or more of a service type, a service priority, a delay requirement, a traffic volume, and a traffic periodicity.

The channel status of the STA may include one or more of received signal strength (received signal strength indicator, RSSI)/reference signal received power (reference signal received power, RSRP), a signal-to-noise ratio (signal-to-noise ratio, SNR)/signal to interference plus noise ratio (signal to interference plus noise ratio, SINR), channel usage, and an interference duty cycle of the STA.

The instant messaging performance of the STA includes one or more of a packet loss rate (packet error rate, PER), a delay, and a queue depth of the STA.

The device status of the STA includes one or more of a temperature, a remaining power, and a charging status of the STA.

For example, an initial transmission parameter of the STA may be a transmission parameter 1, for example, a bandwidth of 80 M, an antenna quantity 2*2 (to be specific, a quantity of receive antennas is 2, and a quantity of transmit antennas is also 2, which may also be referred to as that a stream quantity is 2*2 multiple-input multiple-output (multiple-input multiple-output, MIMO)), and an MCS of 1024QAM.

The STA may determine a new transmission parameter, for example, a transmission parameter 2, based on one or more of the service scenario and the traffic feature of the STA, the channel status, the instant messaging performance of the STA, and the device status of the STA. When the STA switches to the new transmission parameter, power consumption of receiving and sending data by the STA based on the new transmission parameter is less than or equal to power consumption of receiving and sending data by the STA based on the initial transmission parameter.

For example, the STA determines new transmission based on the service scenario of the STA. The STA may classify the service scenario of the STA into the following types based on a data throughput and a delay that are required by a service: a high-throughput/low-delay service scenario, a medium-throughput service scenario, a low-throughput service scenario, and an extremely low-throughput service scenario.

Optionally, in a possible implementation, the STA may set a throughput threshold or a throughput rate threshold, and a delay threshold, and determine a service type of the service based on a relationship (a "greater than or less than" relationship, an "equal to" relationship, or the like) between a throughput of the service and the throughput threshold or a relationship between a throughput rate and the throughput rate threshold, and a relationship between a delay required by the service and the delay threshold. When the data throughput of the service is greater than a throughput threshold 1 or the throughput rate is greater than a throughput rate threshold 1, and the delay is less than the delay threshold, the STA may determine that the service is a high-throughput/low-delay service. When the data throughput of the service is less than a throughput threshold 1 and greater than a throughput threshold 2 or the throughput rate is less than a throughput rate threshold 1 and greater than a throughput rate threshold 2, and the delay is greater than the delay threshold, the STA may determine that the service is a medium-throughput service. When the data throughput of the service is less than a throughput threshold 2 and greater than a throughput threshold 3 or the throughput rate is less than a throughput rate threshold 2 and greater than a throughput rate threshold 3, and the delay is greater than the delay threshold, the STA may determine that the service is a low-throughput service. When the data throughput of the service is less than a throughput threshold 3 or the throughput rate is less than a throughput rate threshold 3, and the delay is greater than the delay threshold, the STA may determine that the service is an extremely low-throughput service.

Values of the throughput threshold 1, the throughput threshold 2, the throughput threshold 3, the throughput rate threshold 1, the throughput rate threshold 2, the throughput rate threshold 3, and the delay threshold are not limited in this embodiment of this application. It may be understood that the throughput threshold 1, the throughput threshold 2, the throughput threshold 3, the throughput rate threshold 1, the throughput rate threshold 2, the throughput rate threshold 3, and the delay threshold may become different in STAs produced by different manufacturers. The service type in this embodiment of this application is merely an example, and the service scenario of the STA is not limited to a high-throughput/low-delay service scenario, a medium-throughput service scenario, a low-throughput service scenario, and an extremely low-throughput service scenario.

For example, the high-throughput/low-delay service scenario may include scenarios such as playing a video by the STA, displaying a real-time game interface, uploading data or downloading data, and making a video call. The medium-throughput service scenario may include a scenario in which the STA downloads data and a download rate is limited to tens of megabytes. The low-throughput service scenario may include a short video playing service. The extremely low-throughput service may include services such as e-book reading and web page browsing.

Initial transmission parameters and low-power transmission parameters corresponding to different types of service scenarios are shown in Table 1.

**Table 1**

| Service scenario | Initial transmission parameter | To-be-selected low-power transmission parameter |
|---|---|---|
| High-throughput/Low-delay service scenario | Maximum bandwidth & 2*2 MIMO | Maximum bandwidth & 2*2 MIMO |
| Medium-throughput service scenario | Maximum bandwidth & 2*2 MIMO | Maximum bandwidth & single-input single-output (1*1 (single-input single-output, SISO)) |
| Low-throughput service scenario | Maximum bandwidth & 2*2 MIMO | Bandwidth of 20 M & 1*1 SISO |
| Extremely low-throughput service scenario | Maximum bandwidth & 2*2 MIMO | Bandwidth of 20 M & 1*1 SISO, and MCS<7 |

As shown in Table 1, when the service scenario is a high-throughput/low-delay service scenario, an initial transmission parameter of the STA may be a maximum bandwidth (for example, 160 MHz or 80 MHz) that can be supported by the STA and 2*2 MIMO, and a low-power transmission parameter that may be selected by the STA may also be the maximum bandwidth and 2*2 MIMO. That is, in the high-throughput/low-delay service scenario, to ensure communication performance, the to-be-selected low-power transmission parameter may be the same as the initial transmission parameter. When the service scenario is a medium-throughput service scenario, an initial transmission parameter of the STA may be a maximum bandwidth and 2*2 MIMO, and a low-power transmission parameter that may be selected by the STA may be the maximum bandwidth and 1*1 SISO. When the service scenario is a low-throughput service scenario, an initial transmission parameter of the STA may be a maximum bandwidth and 2*2 MIMO, and a low-power transmission parameter that may be selected by the STA may be a bandwidth of 20 M and 1*1 SISO. When the service scenario is an extremely low-throughput service scenario, an initial transmission parameter of the STA may be a maximum bandwidth and 2*2 MIMO, and a low-power transmission parameter that may be selected by the STA may be a bandwidth of 20 M, 1*1 SISO, supported highest MCS<7, and an order of the MCS is less than 7, that is, the MCS is less than QAM of 2 to the power of 7.

It may be understood that the service scenario, the initial transmission parameter corresponding to the service scenario, and the to-be-selected low-power transmission parameter that are shown in Table 1 are merely examples. This is not limited in this embodiment of this application.

When the STA establishes a Wi-Fi connection to the AP, a highest transmission parameter (the maximum bandwidth supported by the STA, a maximum transceiver antenna quantity, and the highest MCS) that can be supported by the STA is selected through negotiation based on a protocol, for example, the initial transmission parameter shown in Table 1. After Wi-Fi is established, the STA may determine, based on the service scenario, the to-be-selected transmission parameter (namely, the to-be-selected low-power transmission parameter in Table 1) that may reduce power consumption.

The STA may alternatively select the to-be-selected low-power transmission parameter based on the service scenario and the traffic feature, the channel status, the instant messaging performance of the STA, and the device status of the STA. When a service type of a current service of the STA is a medium/low/extremely low-throughput service scenario, and a throughput requirement of a throughput service is met, a better channel status (for example, a larger RSSI and/or a larger SNR), better instant messaging performance (for example, a smaller PER and/or a smaller queue depth), and a poorer device status (for example, a smaller remaining power and/or a higher temperature of a mobile phone) of the STA may lead to a lower bandwidth of the to-be-selected low-power transmission parameter and a smaller antenna quantity. A low-order MCS may be selected in the extremely low-throughput service scenario. For example, when the service type of the current service of the STA is a medium-throughput service scenario, a value of the RSSI is approximately -35 dBm, the PER is less than 5%, and the remaining power of the device is less than 30%, an input/output antenna in the to-be-selected low-power transmission parameter may be a single antenna.

Optionally, in a possible implementation, the STA may store to-be-selected low-power transmission parameter values corresponding to the STA in a case of different service scenarios, traffic features, channel statuses, instant messaging performance of the STA, and device statuses of the STA.

Further, the STA may store, in a table, different to-be-selected low-power transmission parameter values corresponding to different service scenarios and traffic features, channel statuses, instant messaging performance of the STA, and device statuses of the STA.

The STA may switch the transmission parameter by adjusting an operating mode (or referred to as a working mode) of a Wi-Fi chip in the STA. It may be understood that, the Wi-Fi chip in the STA may adjust the transmission parameter of the STA device by changing a working mode of a hardware circuit. One operating mode may correspond to one set of transmission parameters.

### ② The STA notifies the AP.

The STA may notify the AP of the selected transmission parameter. The STA may notify the AP of the antenna quantity in the transmission parameter in an SMPS mode, or may notify the AP of the antenna quantity and the bandwidth in the transmission parameter by using an OMI. The STA may further add a user-defined field to the OMI to indicate an MCS. The STA may notify, by using the OMI to which the user-defined field is added, the AP of the antenna quantity, the bandwidth, and the MCS in the transmission parameter. In this embodiment of this application, a manner in which the STA notifies the AP of the transmission parameter is not limited.

After receiving the transmission parameter sent by the STA, the AP may return an acknowledgement message (acknowledgement, ACK) to the STA.

### ③ The STA switches the transmission parameter.

After the STA receives the ACK, the STA may switch the transmission parameter.

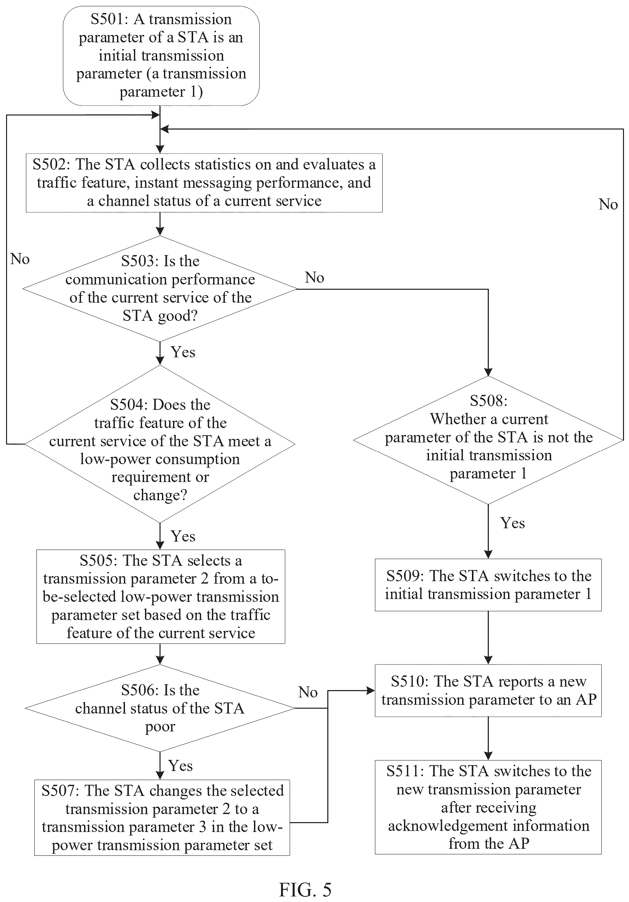

With reference to the diagram of the scenario in which the STA device unilaterally determines the transmission parameter in FIG. 4, an embodiment of this application provides a transmission parameter switching method. As shown in FIG. 5, the transmission parameter switching method provided in this embodiment of this application may include the following steps.

S501: A transmission parameter of a STA is an initial transmission parameter.

The transmission parameter of the STA may be the initial transmission parameter (which may be referred to as a transmission parameter 1). The initial transmission parameter may be a transmission parameter negotiated about when the STA and an AP establish a Wi-Fi connection. For example, the transmission parameter 1 may be a maximum bandwidth (for example, 160 MHz or 80 MHz) that can be supported by the STA, 2*2 MIMO, and an order of an MCS is greater than or equal to 7 (for example, the MCS is equal to 1024QAM).

S502: The STA collects statistics on and evaluates a traffic feature, instant messaging performance, and a channel status of a current service.

The STA may collect statistics on and evaluate one or more of information such as the traffic feature, the channel status, instant messaging performance, and a device status of the current service in the STA.

In a possible implementation, step S502 is periodically triggered. To be specific, the STA may periodically collect statistics on and evaluate the traffic feature, the instant messaging performance, and the channel status of the current service.

S503: The STA determines whether communication performance of the current service of the STA is good; and performs step S504 if yes; or performs step S508 if no.

The STA may determine, based on one or more of a PER, a delay, and a queue depth of the current service, that the communication performance of the current service of the STA is good or poor.

In a possible implementation, when the PER of the current service is less than a threshold M1, and/or the delay of the current service is less than T1, and/or the queue depth is less than L1, the STA determines that the communication performance of the current service is good.

In a possible implementation, when the PER of the current service is greater than a threshold M2, and/or the delay of the current service is greater than T2, and/or the queue depth is greater than L2, the STA determines that the communication performance of the current service is poor.

It may be understood that the threshold M2 may be greater than or equal to the threshold M1. The threshold T2 may be greater than or equal to the threshold T1. The threshold L2 may be greater than or equal to the threshold L1. Specific values of the threshold M1, the threshold M2, the threshold T1, the threshold T2, the threshold L1, and the threshold L2 are not limited in this embodiment of this application.

S504: The STA determines whether the traffic feature of the current service of the STA meets a low power consumption requirement or changes; and performs step S505 if yes; or performs step S502 if no.

The traffic feature of the current service of the STA may be represented by a throughput rate of current service data (for example, traffic of a download service is usually high, traffic of an online video or traffic of a live broadcast is low, and traffic of e-book reading is lower). Alternatively, the traffic feature may be represented by a delay requirement of the service (for example, a game service usually has a higher delay requirement). When the traffic feature changes, a type of the current service in the STA changes (for example, a mobile phone stops downloading an application and browsing a web page). Alternatively, in comparison between a current data procedure of the STA and traffic of data transmitted after an initial parameter is determined, a data throughput changes in descending order. In this case, the STA may perform step S505. The STA may perform step S502 when the traffic feature of the current service of the STA does not change, and the current service does not meet the low power consumption requirement (for example, the current service is a game service).

S505: The STA selects a transmission parameter 2 from a to-be-selected low-power transmission parameter set based on the traffic feature of the current service.

The STA may select the transmission parameter 2 from the to-be-selected low-power transmission parameter set based on the traffic feature of the current service. For the to-be-selected low-power transmission parameter set, refer to Table 1. Table 1 includes low-power transmission parameters respectively corresponding to four different service scenarios. For example, in Table 1, the low-power transmission parameter corresponding to the extremely low-throughput service is the bandwidth of 20 M, 1*1 SISO, and MCS<7.

In a possible implementation, the transmission parameter 2 may be the same as the transmission parameter 1. For example, when the traffic feature of the STA changes, to ensure communication performance of the current service, the transmission parameter 2 selected by the STA may be the same as the transmission parameter 1.

S506: The STA determines whether the channel status is poor; and performs step S507 if yes; or performs step S510 if no.

The STA may determine, based on any one or more of an RSSI, an RSRP, an SNR, an SINR, channel usage, and an interference duty cycle, whether a current channel status of the STA is good or poor.

In a possible implementation, when the RSSI is greater than a threshold A1, and/or the RSRP is greater than a threshold B1, and/or the SNR is greater than a threshold C1, and/or the SINR is greater than a threshold D1, and/or the channel usage is less than a threshold E1, and/or the interference duty cycle is less than a threshold F1, the STA determines that the current channel status is good. In this case, the STA may perform step S510. To be specific, the STA reports a new transmission parameter (namely, the transmission parameter 2) to the AP.

In a possible implementation, when the RSSI is less than a threshold A2, and/or the RSRP is less than a threshold B2, and/or the SNR is less than a threshold C2, and/or the SINR is less than a threshold D2, and/or the channel usage is greater than a threshold E2, and/or the interference duty cycle is greater than a threshold F2, the STA determines that the current channel status is poor. In this case, the STA may perform step S507.

It may be understood that the threshold A2 is less than or equal to the threshold A1. The threshold B2 is less than or equal to the threshold B1. The threshold C2 is less than or equal to the threshold C1. The threshold D2 is less than or equal to the threshold D1. The threshold E2 is greater than or equal to the threshold E1. The threshold F2 is greater than or equal to the threshold F1. Values of the threshold A1, the threshold B1, the threshold C1, the threshold D1, the threshold E1, the threshold F1, the threshold A2, the threshold B2, the threshold C2, the threshold D2, the threshold E2, and the threshold F2 are not limited in this embodiment of this application.

S507: The STA changes the selected transmission parameter 2 to a transmission parameter 3 in the to-be-selected low-power transmission parameter set.

When the STA determines that the channel status is poor, to avoid affecting transmission efficiency or communication performance, the STA may change the transmission parameter 2 to the transmission parameter 3 in the to-be-selected low-power transmission parameter set. A bandwidth in the transmission parameter 3 may be greater than a bandwidth in the transmission parameter 2, and/or a transceiver antenna quantity in the transmission parameter 3 is greater than a transceiver antenna quantity in the transmission parameter 2, and/or an order of an MCS in the transmission parameter 3 is greater than an order of an MCS in the transmission parameter 2 (or referred to as that a value of the MCS in the transmission parameter 3 is greater than a value of the MCS in the transmission parameter 2).

For example, the transmission parameter 2 is a bandwidth of 20 M, 1*1 SISO, and MCS<7, and the transmission parameter 3 is a bandwidth of 40 M, 1*1 SISO, and MCS=1024QAM.

The transmission parameter 2 and the transmission parameter 3 are merely examples. Bandwidths, antenna quantities, and MCSs in the transmission parameter 2 and the transmission parameter 3 are not specifically limited in this embodiment of this application.

After the STA changes a to-be-selected low-power transmission parameter from the transmission parameter 2 to the transmission parameter 3, the STA may perform step S510, to be specific, report the transmission parameter 3 to the AP.

In a possible implementation, the transmission parameter 3 may be the initial transmission parameter 1. To be specific, when the STA determines that the channel status is poor, to avoid affecting transmission efficiency or communication performance, the STA changes the to-be-selected low-power transmission parameter from the transmission parameter 2 to the initial transmission parameter.

S508: The STA determines whether the current transmission parameter is not the initial transmission parameter 1; and performs step S509 if the current transmission parameter is not the initial transmission parameter 1; or performs step S502 if the current transmission parameter is the initial transmission parameter 1.

When the STA determines that communication performance of the current service is poor, the STA may determine whether a currently used transmission parameter is the initial transmission parameter, namely, the transmission parameter 1. If the current transmission parameter of the STA is not the transmission parameter, to improve the channel status, the STA may switch the current transmission parameter to the initial transmission parameter, that is, the STA may perform step S509. When the STA determines that the current transmission parameter is the initial transmission parameter, the STA may continue to monitor, collect statistics on, and evaluate the traffic feature, the communication performance, and channel status information of the current service. That is, when the STA determines that the current transmission parameter is the initial transmission parameter, the STA may perform step S502.

S509: The STA switches to the initial transmission parameter 1.

When the STA determines that the channel status is poor, but the current transmission parameter in the STA is not the initial parameter, the STA may switch to the initial transmission parameter 1.

S510: The STA reports the new transmission parameter to the AP.

S511: The STA switches to the new transmission parameter after receiving an acknowledgement message from the AP.

When the STA chooses to switch the transmission parameter, the STA needs to report the new transmission parameter to the AP. After receiving the reported new transmission parameter, the AP returns an acknowledgement message to the STA. After the STA receives the acknowledgement message from the AP, the STA switches to the new transmission parameter.

For example, when the STA determines to switch the initial transmission parameter to the transmission parameter 2, the STA needs to report the transmission parameter 2 to the AP. After the STA receives the acknowledgement message from the AP, the STA may switch the transmission parameter to the transmission parameter 2.

When the STA determines to switch the transmission parameter 2 to the transmission parameter 3, the STA needs to report the transmission parameter 3 to the AP. After the STA receives the acknowledgement message from the AP, the STA may switch the transmission parameter 2 to the transmission parameter 3.

When the STA switches the current transmission parameter to the initial transmission parameter, the STA needs to report the initial transmission parameter to the AP. After the STA receives the acknowledgement message from the AP, the STA may switch the current transmission parameter to the initial transmission parameter.

In the transmission parameter switching method provided in FIG. 5, the STA may determine the to-be-selected low-power transmission parameter based on one or more of the service scenario and the traffic feature of the STA, the channel status, the instant messaging performance of the STA, and the device status of the STA, and then switch the current transmission parameter to the low-power transmission parameter. In this way, compared with a case in which the STA interacts with the AP based on an initially negotiated transmission parameter, when the STA interacts with the AP based on the low-power transmission parameter, power consumption can be reduced.

### Scenario 2: A STA and an AP collaboratively determine a transmission parameter.

The STA may receive transmission information sent by the AP, and the STA may determine a to-be-selected low-power transmission parameter based on the transmission information, and one or more of a service scenario and a traffic feature of the STA, a channel status, instant messaging performance of the STA, and a device status of the STA.

In a possible implementation, the STA may send an instruction to the AP. The instruction may indicate the AP to send the transmission parameter.

Optionally, in another possible implementation, the AP may periodically send the transmission information to the STA.

In this embodiment of this application, the transmission information may include a reference transmission parameter and reference information. The AP may send the reference transmission parameter or the reference information to the STA. The reference transmission parameter may be a transmission parameter determined by the AP based on one or more of a service scenario, a traffic feature, a channel status, and instant messaging performance that are in the AP and that are obtained by the AP. The STA may determine a final to-be-selected low-power transmission parameter based on the reference transmission parameter. The reference information may be one or more of the service scenario and the traffic feature, the channel status, and the instant messaging performance that are in the AP and that are obtained by the AP.

That the STA and the AP collaboratively determine the to-be-selected low-power transmission parameter may include the following two cases:
**① The STA determines the transmission parameter based on the reference transmission parameter delivered by the AP.**
**② The STA determines the transmission parameter based on the reference information delivered by the AP.**

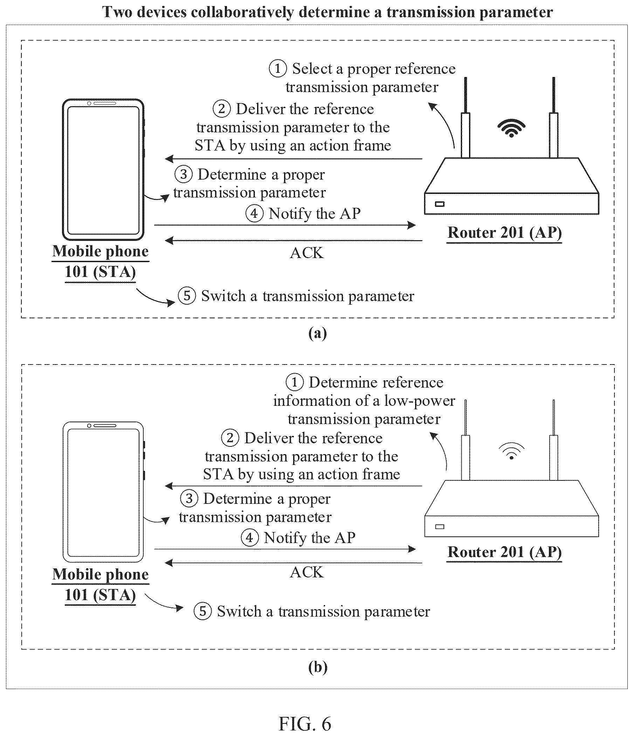

FIG. 6 is a diagram of a scenario in which a STA and an AP collaboratively determine a transmission parameter according to an embodiment of this application. As shown in (a) in FIG. 6, that the STA device determines the transmission parameter based on a reference transmission parameter delivered by the AP may include the following steps.
① The AP selects a proper reference transmission parameter.

The AP may select the reference transmission parameter based on sensed information of the AP. For example, the sensed information of the AP may include one or more of a service traffic feature, a channel status, and communication performance of the AP.

For example, in a possible implementation, the AP may select the proper reference transmission parameter based on a service traffic feature between the AP and the STA. If the service traffic feature between the AP and the STA meets a medium-throughput service scenario, the reference transmission parameter selected by the AP may be the to-be-selected low-power transmission parameter corresponding to the medium-throughput service scenario in Table 1: the maximum bandwidth and 1*1 SISO. If the service traffic feature between the AP and the STA meets a low-throughput service scenario, the reference transmission parameter selected by the AP may be the to-be-selected low-power transmission parameter corresponding to the low-throughput service scenario in Table 1: the bandwidth of 20 M and 1*1 SISO. If the service traffic feature between the AP and the STA meets an extremely low-throughput service scenario, the reference transmission parameter selected by the AP may be the to-be-selected low-power transmission parameter corresponding to the extremely low-throughput service scenario in Table 1: the bandwidth of 20 M, 1*1 SISO, and supported highest MCS<7.

In a possible implementation, a better channel status and better communication performance of the AP indicate that in the reference transmission parameter selected by the AP, a bandwidth may be smaller, and a transceiver antenna quantity may be smaller (namely, 1*1 SISO). A low-order MCS may be selected in the extremely low-throughput service scenario.

② The AP delivers the reference transmission parameter to the STA by using an action frame.

After selecting the reference transmission parameter, the AP may deliver the reference transmission parameter to the STA by using the action frame. The action frame may carry specific values of a bandwidth, a transceiver antenna quantity (namely, a stream quantity), and/or an order of an MCS that are included in the reference transmission parameter. For a specific format of the action frame, refer to the descriptions of the action frame in the 802.11 protocol. Details are not described herein again.

The AP may periodically select the proper reference transmission parameter, and periodically send the reference transmission parameter to the STA. Optionally, after the AP receives an instruction that indicates the AP to send the reference transmission parameter and that is sent by the STA, the AP may select the reference transmission parameter based on the sensed information of the AP, and send the reference transmission parameter to the STA by using the action frame.

It may be understood that the AP may be connected to a plurality of STAs, and the AP may select a reference transmission parameter for each STA based on one or more of a service traffic feature, a channel status, and communication performance between the AP and each STA, and send each reference transmission parameter to the corresponding STA.

③ The STA determines a proper transmission parameter based on the reference transmission parameter delivered by the AP.

The STA may determine a to-be-selected transmission parameter based on one or more of a service scenario and a traffic feature of the STA, a channel status, instant messaging performance of the STA, and a device status of the STA. Then, the STA may determine a final target transmission parameter based on the to-be-selected transmission parameter determined by the STA and the reference transmission parameter delivered by the AP.

For a specific manner in which the STA determines the to-be-selected transmission parameter based on one or more of the service scenario and the traffic feature of the STA, the channel status, the instant messaging performance of the STA, and the device status of the STA, refer to the foregoing descriptions in FIG. 4. Details are not described herein again.

In a possible implementation, that the STA may determine the final target transmission parameter based on the to-be-selected transmission parameter determined by the STA and the reference transmission parameter delivered by the AP may specifically include: when the to-be-selected transmission parameter is the same as the reference transmission parameter, the target transmission parameter may be either the to-be-selected transmission parameter or the reference transmission parameter; or when the to-be-selected transmission parameter is different from the reference transmission parameter, the STA uses a bandwidth with a larger bandwidth value in the to-be-selected transmission parameter and the reference transmission parameter as a bandwidth in the target transmission parameter, uses an antenna quantity with a larger value of a transceiver antenna quantity in the to-be-selected transmission parameter and the reference transmission parameter as a transceiver antenna quantity in the target transmission parameter, and uses an MCS with a larger MCS order value in the to-be-selected transmission parameter and the reference transmission parameter as an MCS in the target transmission parameter.

For example, if the to-be-selected transmission parameter is a bandwidth of 20 M, 1*1 SISO, and an order of an MCS is 8, and the reference transmission parameter is a bandwidth of 20 M, 1*1 SISO, and an order of an MCS is 8, the target transmission parameter is a bandwidth of 20 M, 1*1 SISO, and an order of an MCS is 8.

For example, if the to-be-selected transmission parameter is a bandwidth of 20 M, 1*1 SISO, and an order of an MCS is 11, and the reference transmission parameter is a bandwidth of 40 M, 2*2 SISO, and an order of an MCS is 7, the target parameter is a bandwidth of 40 M, 2*2 SISO, and an order of an MCS is 11.

④ The STA notifies the AP.

The STA may notify the AP of the proper transmission parameter determined based on the reference transmission parameter delivered by the AP, namely, the target transmission parameter. Specifically, the STA may notify the AP of an antenna quantity in the target transmission parameter in an SMPS mode, or may notify the AP of an antenna quantity and a bandwidth in the target transmission parameter by using an OMI. The STA may further add a user-defined field to the OMI to indicate an MCS. The STA may notify, by using the OMI to which the user-defined field is added, the AP of the antenna quantity, the bandwidth, and the MCS in the target transmission parameter. In this embodiment of this application, a manner in which the STA notifies the AP of the target transmission parameter is not limited.

⑤ After receiving an ACK delivered by the AP, the STA switches the transmission parameter.

After receiving the ACK delivered by the AP, the STA may switch a current transmission parameter to the target transmission parameter. For a specific manner in which the STA switches the transmission parameter, refer to the foregoing descriptions. Details are not described herein again.

As shown in (b) in FIG. 6, that the STA device determines the transmission parameter based on reference information delivered by the AP may include the following steps.
① The AP determines reference information of a low-power transmission parameter.

The AP may detect and obtain the reference information of the low-power transmission parameter in the AP. For example, the reference information may include one or more of a current service scenario, a current traffic feature, a current channel status, and current instant messaging performance between the AP and the STA.

② The AP delivers the reference information of the low-power transmission parameter to the STA by using an action frame.

The AP may deliver the reference information to the STA by using the action frame.

The AP may periodically obtain one or more of the service scenario, the traffic feature, the channel status, and the instant messaging performance between the AP and the STA, and periodically deliver one or more of the obtained service scenario, the obtained traffic feature, the obtained channel status, and the obtained instant messaging performance between the AP and the STA to the STA. Optionally, after the AP receives an instruction that indicates the AP to send the reference information and that is sent by the STA, the AP may obtain the reference information, and send the reference information to the STA by using the action frame.

③ The STA determines a proper transmission parameter based on the reference information delivered by the AP.

In a possible implementation, the STA may determine a to-be-selected transmission parameter 1 based on the reference information delivered by the AP, and then the STA may determine a to-be-selected transmission parameter 2 based on one or more of a service scenario, a traffic feature, a channel status, and instant messaging performance in the STA. Then, the target transmission parameter is determined based on the to-be-selected transmission parameter 1 and the to-be-selected transmission parameter 2.

For a manner in which the STA determines the to-be-selected transmission parameter 1 based on the reference information and a manner in which the STA determines the to-be-selected transmission parameter 2 based on one or more of the service scenario, the traffic feature, the channel status, and the instant messaging performance in the STA, refer to the foregoing descriptions in step 1 in FIG. 4. Details are not described herein again.

For a manner in which the STA determines the target transmission parameter based on the to-be-selected transmission parameter 1 and the to-be-selected transmission parameter 2, refer to the descriptions in step 3 in (a) in FIG. 6. Details are not described herein again.

In a possible implementation, the STA may obtain a set of comprehensive low-power consumption information such as a service scenario, a traffic feature, a channel status, and instant messaging performance information based on the reference information delivered by the AP and the service scenario, the traffic feature, the channel status, and the instant messaging performance in the STA. Finally, the STA may determine the target transmission parameter based on the comprehensive low-power consumption information such as the service scenario, the traffic feature, the channel status, and the instant messaging performance information.

④ The STA notifies the AP.

The STA may report the determined target transmission parameter to the AP. Specifically, the STA may notify the AP of an antenna quantity in the target transmission parameter in an SMPS mode, or may notify the AP of an antenna quantity and a bandwidth in the target transmission parameter by using an OMI. The STA may further add a user-defined field to the OMI to indicate an MCS. The STA may notify, by using the OMI to which the user-defined field is added, the AP of the antenna quantity, the bandwidth, and the MCS in the target transmission parameter. In this embodiment of this application, a manner in which the STA notifies the AP of the target transmission parameter is not limited.

⑤ After receiving an ACK delivered by the AP, the STA switches the transmission parameter.

After receiving the ACK delivered by the AP, the STA may switch a current transmission parameter to the target transmission parameter. For a specific manner in which the STA switches the transmission parameter, refer to the foregoing descriptions. Details are not described herein again.

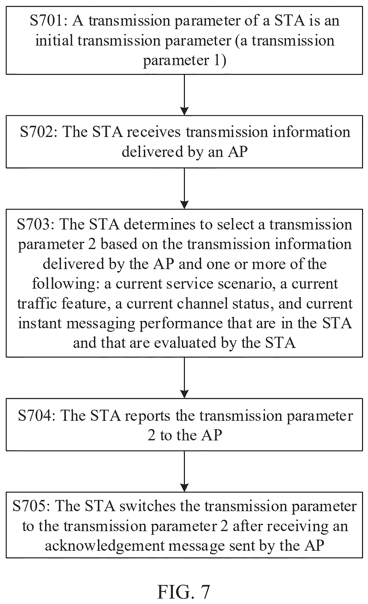

With reference to the diagram of the scenario in which the STA and the AP collaboratively determine the transmission parameter in FIG. 6, an embodiment of this application provides a transmission parameter switching method. As shown in FIG. 7, the transmission parameter switching method provided in this embodiment of this application may include the following steps.

S701: A transmission parameter of a STA is an initial transmission parameter (a transmission parameter 1).

The transmission parameter of the STA may be the initial transmission parameter (which may be referred to as a transmission parameter 1). The initial transmission parameter may be a transmission parameter negotiated about when the STA and an AP establish a Wi-Fi connection. For example, the transmission parameter 1 may be a maximum bandwidth (for example, 160 MHz or 80 MHz) that can be supported by the STA, 2*2 MIMO, and an order of an MCS is greater than or equal to 7 (for example, the MCS is equal to 1024QAM).

S702: The STA receives transmission information delivered by the AP.

The STA may receive the transmission information delivered by the AP.

The transmission information delivered by the AP may be a reference transmission parameter, or may be reference information.

S703: The STA determines to select a transmission parameter 2 based on the transmission information delivered by the AP and one or more of a current service scenario and a current traffic feature, a current channel status, and current instant messaging performance that are in the STA and that are evaluated by the STA.

The STA may determine a to-be-selected transmission parameter based on one or more of the current service scenario and the current traffic feature, the current channel status, and the current instant messaging performance that are in the STA and that are evaluated by the STA. Herein, for this, refer to the foregoing descriptions. Details are not described herein again.

When the transmission information is the reference transmission parameter, the STA may determine the transmission parameter 2 based on the reference transmission parameter and the to-be-selected transmission parameter determined by the STA. For details, refer to the foregoing described process in which the STA may determine a target transmission parameter based on the reference transmission parameter and the to-be-selected transmission parameter determined by the STA. Details are not described herein again.

When the transmission information is the reference information, the STA may determine the to-be-selected transmission parameter 1 based on the reference information. Then, the STA may determine the to-be-selected transmission parameter 2 based on one or more of the service scenario, the traffic feature, the channel status, and the instant messaging performance in the STA. Then, the target transmission parameter is determined based on the to-be-selected transmission parameter 1 and the to-be-selected transmission parameter 2.

For a manner in which the STA determines the to-be-selected transmission parameter 1 based on the reference information and a manner in which the STA determines the to-be-selected transmission parameter 2 based on one or more of the service scenario, the traffic feature, the channel status, and the instant messaging performance in the STA, refer to the foregoing descriptions in step 1 in FIG. 4. Details are not described herein again.

For a manner in which the STA determines the target transmission parameter based on the to-be-selected transmission parameter 1 and the to-be-selected transmission parameter 2, refer to the descriptions in step 3 in (a) in FIG. 6. Details are not described herein again.

S704: The STA reports the transmission parameter 2 to the AP.

S705: The STA switches the transmission parameter to the transmission parameter 2 after receiving an acknowledgement message sent by the AP.

The STA may report the transmission parameter 2 to the AP. For a specific manner in which the STA reports the transmission parameter 2 to the AP, refer to the foregoing descriptions. Details are not described herein again.

The AP may return the acknowledgement message ACK to the STA after receiving a report of the STA. The STA may switch the transmission parameter to the transmission parameter 2 after receiving the ACK returned by the AP.

In the transmission parameter switching method provided in this embodiment of this application, the STA may determine a low-power transmission parameter based on a reference transmission parameter that is determined by the AP based on a service scenario, a traffic feature, a channel status, and instant messaging performance in the AP and that is delivered by the AP, or reference information, such as a service scenario, a traffic feature, a channel status, and instant messaging performance in the AP, delivered by the AP. The STA may more accurately select a proper low-power transmission parameter based on sensed information of two ends (namely, information such as a service scenario, a traffic feature, a channel status, and instant messaging performance that are sensed by each of the AP and the STA). In this way, a terminal device can implement low-power transmission based on the two ends.

The following describes an example electronic device 100 provided in embodiments of this application.

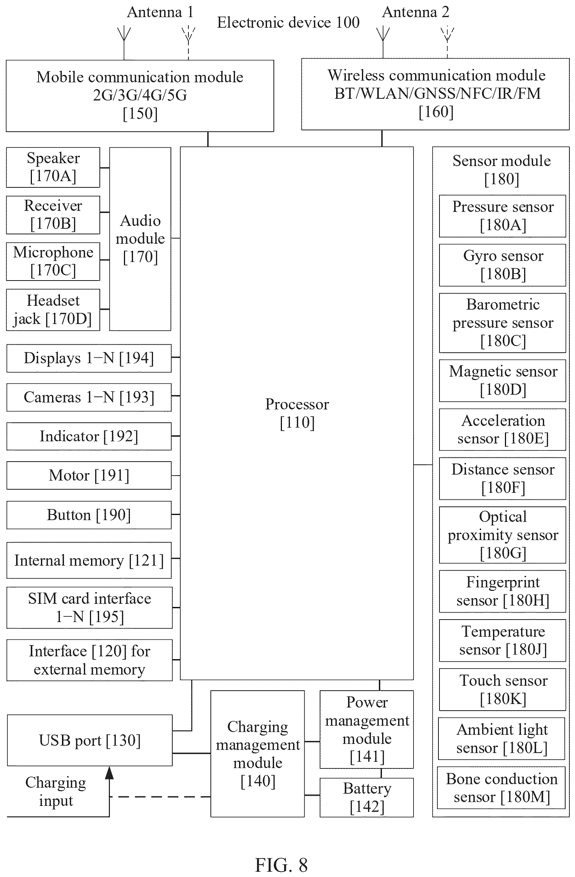

FIG. 8 is a diagram of a structure of an electronic device 100 according to an embodiment of this application.

The following specifically describes this embodiment by using the electronic device 100 as an example. It should be understood that, the electronic device 100 may include more or fewer components than those shown in the figure, may combine two or more components, or may have different component configurations. The various components shown in the figure may be implemented in hardware, software, or a combination of hardware and software including one or more signal processing and/or application-specific integrated circuits.

The electronic device 100 may include a processor 110, an interface 120 for external memory, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through the PCM bus interface. In some embodiments, the audio module 170 may alternatively transfer an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music through the Bluetooth headset.

The MIPI interface may be configured to connect the processor 110 and a peripheral component such as the display 194 or a camera 193. The MIPI interface includes a camera serial interface (camera serial interface, CSI), a display serial interface (display serial interface, DSI), and the like. In some embodiments, the processor 110 and the camera 193 communicate with each other through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The SIM interface may be configured to communicate with the SIM card interface 195, to implement a function of transmitting data to the SIM card or reading data from the SIM card.

The USB port 130 is an interface that conforms to a USB standard specification, and may be specifically a mini USB port, a micro USB port, a USB Type C port, or the like. The USB port 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules that is shown in this embodiment of the present disclosure is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger.

The power management module 141 is configured to connect to the battery 142, the charging management module 140, and the processor 110. The power management module 141 receives an input from the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a solution, applied to the electronic device 100, to wireless communication including 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, and execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro LED, a micro-OLED, a quantum dot light-emitting diode (quantum dot light-emitting diode, QLED), and the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and color of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a mode of transfer between human brain neurons, and may further continuously perform self-learning. Applications such as intelligent cognition of the electronic device 100 may be implemented through the NPU, for example, image recognition, facial recognition, speech recognition, and text understanding.

The interface 120 for external memory may be used to connect to an external storage card, for example, a micro SD card, to extend a storage capability of the electronic device 100. The external memory card communicates with the processor 110 through the interface 120 for external memory, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system and an application required by at least one function (for example, a facial recognition function, a fingerprint recognition function, and a mobile payment function). The data storage area may store data (such as facial information template data and a fingerprint information template) created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB port 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a touch panel. The touch sensor 180K may be disposed in the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication.

The electronic device 100 may be the foregoing STA.

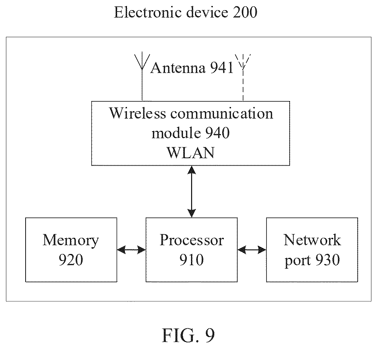

FIG. 9 is a diagram of an example structure of an electronic device 200.

The following specifically describes this embodiment by using the electronic device 200 as an example. It should be understood that, the electronic device 200 may include more or fewer components than those shown in the figure, may combine two or more components, or may have different component configurations. The various components shown in the figure may be implemented in hardware, software, or a combination of hardware and software including one or more signal processing and/or application-specific integrated circuits.

As shown in FIG. 9, the electronic device 200 may include a processor 910, a memory 920, a network port 930, a wireless communication module 940, and an antenna 941.

The memory 920 may be configured to store instructions and data. The processor 910 may invoke the instructions or the data stored in the memory 120, so that the electronic device performs the actions performed by the foregoing AP.

The network port 930 may be configured as a network coupled to the Internet through a wired network such as a broadband network, and may provide access to the Internet for a plurality of electronic devices (for example, STAs). The network port 930 may further include a mobile communication module, and the mobile communication module may be configured to be connected to a core network by using a wireless communication technology.

The wireless communication module 940 may be configured to perform communication by using a wireless local area network standard such as a Wi-Fi network. The wireless communication module 940 may be one or more components integrating at least one communication processor module. The wireless communication module 940 receives an electromagnetic wave through the antenna 941, and performs frequency modulation and filtering processing on an electromagnetic wave. Then, the wireless communication module 940 may further send a processed signal to the processor 910. The wireless communication module may further receive a to-be-sent signal from the processor 910, perform frequency modulation and amplification on the signal, and convert the signal into an electromagnetic wave for radiation through the antenna 941.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

According to the context, the term "when" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

## Claims

1. A transmission parameter switching method, applied to a first electronic device, wherein the method comprises:
after the first electronic device establishes a wireless fidelity Wi-Fi connection to a second electronic device, receiving, by the first electronic device based on a first transmission parameter, transmission information sent by the second electronic device, wherein the transmission information comprises reference information or a first reference transmission parameter, the reference information comprises one or more of a service scenario, a traffic feature, a channel status, and instant messaging performance between the second electronic device and the first electronic device, and the first reference transmission parameter comprises a transmission parameter determined by the second electronic device based on the reference information;
determining, by the first electronic device, a second transmission parameter based on the transmission information and sensed information of the first electronic device, wherein the sensed information comprises one or more of a service scenario, a traffic feature, a channel status, and instant messaging performance of the first electronic device, and a device status of the first electronic device;
sending, by the first electronic device, the second transmission parameter to the second electronic device; and
sending, by the first electronic device, data to the second electronic device based on the second transmission parameter after receiving an acknowledgement message of the second electronic device, wherein the acknowledgement message indicates that the second electronic device successfully receives the second transmission parameter.

2. The method according to claim 1, wherein the first transmission parameter comprises a first bandwidth value, and/or a first antenna quantity, and/or a first modulation and coding scheme MCS; and the second transmission parameter comprises a second bandwidth value, and/or a second antenna quantity, and/or a second MCS.

3. The method according to claim 2, wherein the second bandwidth value is less than the first bandwidth value, and/or the second antenna quantity is less than the first antenna quantity, and/or an order of the second MCS is less than an order of the first MCS.

4. The method according to any one of claims 1 to 3, wherein the transmission information is the first reference transmission parameter, and determining, by the first electronic device, the second transmission parameter based on the transmission information and the sensed information of the first electronic device comprises:
determining, by the first electronic device, a to-be-selected transmission parameter based on the sensed information; and
determining, by the first electronic device, the second transmission parameter based on the first reference transmission parameter and the to-be-selected transmission parameter.

5. The method according to any one of claims 1 to 3, wherein the transmission information is the reference information, and determining, by the first electronic device, the second transmission parameter based on the transmission information and the sensed information of the first electronic device comprises:
determining, by the first electronic device, a second reference transmission parameter based on the transmission information;
determining, by the first electronic device, a to-be-selected transmission parameter based on the sensed information; and
determining, by the first electronic device, the second transmission parameter based on the second reference transmission parameter and the to-be-selected transmission parameter.

6. The method according to claim 4 or 5, wherein determining, by the first electronic device, the to-be-selected transmission parameter based on the sensed information comprises:
when the service scenario in the sensed information is a medium-throughput service, determining, by the first electronic device, that in the to-be-selected transmission parameter, a third bandwidth value is a first value, and/or a third antenna quantity is a second value, and/or an order of a third MCS is a third value; or
when the service scenario in the sensed information is a low-throughput service, determining, by the first electronic device, that in the to-be-selected transmission parameter, a third bandwidth value is a fourth value, and/or a third antenna quantity is a fifth value, and/or an order of a third MCS is a sixth value; or
when the service scenario in the sensed information is an extremely low-throughput service, determining, by the first electronic device, that in the to-be-selected transmission parameter, a third bandwidth value is a seventh value, and/or a third antenna quantity is an eighth value, and/or an order of a third MCS is a ninth value, wherein
the seventh value is less than or equal to the fourth value, the fourth value is less than or equal to the first value, the eighth value is less than or equal to the fifth value, the fifth value is less than or equal to the second value, the ninth value is less than or equal to the sixth value, and the sixth value is less than or equal to the third value.

7. The method according to claim 6, wherein before determining, by the first electronic device, the to-be-selected transmission parameter based on the sensed information, the method further comprises:
when a throughput of a current service in the first electronic device is less than a first throughput threshold and greater than a second throughput threshold, or a throughput rate of the current service is less than a first throughput rate threshold and greater than a second throughput rate threshold, determining, by the first electronic device, that the current service is a medium-throughput service;
when the throughput of the current service is less than the second throughput threshold and greater than a third throughput threshold, or the throughput rate of the current service is less than the second throughput rate threshold and greater than a third throughput rate threshold, determining, by the first electronic device, that the current service is a low-throughput service; and
when a data throughput of the current service is less than the third throughput threshold, or the throughput rate is less than the third throughput rate threshold, determining, by the first electronic device, that the current service is an extremely low-throughput service.

8. The method according to claim 3 or 4, wherein
larger received signal strength RSSI of the first electronic device leads to a lower power consumption specification of the to-be-selected transmission parameter; and/or
a larger signal-to-noise ratio SNR of the first electronic device leads to a lower power consumption specification of the to-be-selected transmission parameter; and/or
a smaller packet loss rate PER of the first electronic device leads to a lower power consumption specification of the to-be-selected transmission parameter; and/or
a smaller remaining power of the first electronic device leads to a lower power consumption specification of the to-be-selected transmission parameter; and/or
a higher temperature of the first electronic device leads to a lower power consumption specification of the to-be-selected transmission parameter.

9. The method according to claim 8, wherein the lower power consumption specification of the to-be-selected transmission parameter comprises: a smaller bandwidth value, and/or a smaller antenna quantity, and/or a lower order of an MCS in the to-be-selected transmission parameter.

10. The method according to any one of claims 4 to 9, wherein
when a fourth bandwidth value in the first reference transmission parameter is greater than the third bandwidth value in the to-be-selected transmission parameter, and/or a fourth antenna quantity in the first reference transmission parameter is greater than the third antenna quantity in the to-be-selected transmission parameter, and/or an order of a fourth MCS in the first reference transmission parameter is greater than the order of the third MCS in the to-be-selected transmission parameter, the second bandwidth value in the second transmission parameter is equal to the fourth bandwidth value, and/or the second antenna quantity is equal to the fourth antenna quantity, and the order of the second MCS is equal to the order of the fourth MCS; and
when the fourth bandwidth value is less than the third bandwidth value, and/or the fourth antenna quantity is less than the third antenna quantity, and/or the order of the fourth MCS is less than the order of the third MCS, the second bandwidth value in the second transmission parameter is equal to the third bandwidth value, and/or the second antenna quantity is equal to the third antenna quantity, and the order of the second MCS is equal to the order of the third MCS.

11. The method according to any one of claims 1 to 10, wherein after receiving the acknowledgement message of the second electronic device, the method further comprises:
receiving, by the first electronic device, data sent by the second electronic device based on the second transmission parameter.

12. A transmission parameter switching method, applied to a second electronic device, wherein the method comprises:
after the second electronic device establishes a wireless fidelity Wi-Fi connection to a first electronic device, sending, by the second electronic device, transmission information to the first electronic device based on a first transmission parameter, wherein the transmission information comprises reference information or a first reference transmission parameter, the reference information comprises one or more of a service scenario, a traffic feature, a channel status, and instant messaging performance between the second electronic device and the first electronic device, and the first reference transmission parameter comprises a transmission parameter determined by the second electronic device based on the reference information;
receiving, by the second electronic device, a second transmission parameter sent by the first electronic device, wherein the second transmission parameter is determined by the first electronic device based on the transmission information and sensed information of the first electronic device, and the sensed information comprises one or more of a service scenario, a traffic feature, a channel status, and instant messaging performance of the first electronic device, and a device status of the first electronic device;
sending, by the second electronic device, an acknowledgement message to the first electronic device, wherein the acknowledgement message indicates that the second electronic device successfully receives the second transmission parameter; and
sending, by the second electronic device, data to the first electronic device based on the second transmission parameter.

13. The method according to claim 12, wherein the first transmission parameter comprises a first bandwidth value, and/or a first antenna quantity, and/or a first modulation and coding scheme MCS; and the second transmission parameter comprises a second bandwidth value, and/or a second antenna quantity, and/or a second MCS.

14. The method according to claim 13, wherein the second bandwidth value is less than the first bandwidth value, the second antenna quantity is less than the first antenna quantity, and the second MCS is less than the first MCS.

15. The method according to claim 12, wherein the transmission information is the first reference transmission parameter, the second transmission parameter is determined by the first electronic device based on the first reference transmission parameter and a to-be-selected transmission parameter, and the to-be-selected transmission parameter is determined by the first electronic device based on the sensed information.

16. The method according to claim 12, wherein the transmission information is the reference information, the second transmission parameter is determined by the first electronic device based on a second reference transmission parameter and a to-be-selected transmission parameter, the to-be-selected transmission parameter is determined by the first electronic device based on the sensed information, and the second reference transmission parameter is determined by the first electronic device based on the reference information.

17. The method according to claim 15 or 16, wherein
when the service scenario in the sensed information is a medium-throughput service, in the to-be-selected transmission parameter, a third bandwidth value is a first value, and/or a third antenna quantity is a second value, and/or an order of a third MCS is a third value; or
when the service scenario in the sensed information is a low-throughput service, in the to-be-selected transmission parameter, a third bandwidth value is a fourth value, and/or a third antenna quantity is a fifth value, and/or an order of a third MCS is a sixth value; or
when the service scenario in the sensed information is an extremely low-throughput service, in the to-be-selected transmission parameter, a third bandwidth value is a seventh value, and/or a third antenna quantity is an eighth value, and/or an order of a third MCS is a ninth value, wherein
the seventh value is less than or equal to the fourth value, the fourth value is less than or equal to the first value, the eighth value is less than or equal to the fifth value, the fifth value is less than or equal to the second value, the ninth value is less than or equal to the sixth value, and the sixth value is less than or equal to the third value.

18. The method according to claim 17, wherein
when a throughput of a current service in the first electronic device is less than a first throughput threshold and greater than a second throughput threshold, or a throughput rate of the current service is less than a first throughput rate threshold and greater than a second throughput rate threshold, a service scenario of the current service is a medium-throughput service;
when the throughput of the current service is less than the second throughput threshold and greater than a third throughput threshold, or the throughput rate of the current service is less than the second throughput rate threshold and greater than a third throughput rate threshold, the service scenario of the current service is a low-throughput service; and
when a data throughput of the current service is less than the third throughput threshold, or the throughput rate is less than the third throughput rate threshold, the service scenario of the current service is an extremely low-throughput service.

19. The method according to claim 15 or 16, wherein
larger received signal strength of the first electronic device leads to a lower power consumption specification of the to-be-selected transmission parameter; and/or
a larger signal-to-noise ratio SNR of the first electronic device leads to a lower power consumption specification of the to-be-selected transmission parameter; and/or
a smaller packet loss rate PER of the first electronic device leads to a lower power consumption specification of the to-be-selected transmission parameter; and/or
a smaller remaining power of the first electronic device leads to a lower power consumption specification of the to-be-selected transmission parameter; and/or
a higher temperature of the first electronic device leads to a lower power consumption specification of the to-be-selected transmission parameter.

20. The method according to claim 19, wherein the lower power consumption specification of the to-be-selected transmission parameter comprises: a smaller bandwidth value, and/or a smaller antenna quantity, and/or a lower order of an MCS in the to-be-selected transmission parameter.

21. The method according to any one of claims 12 to 20, wherein
when a fourth bandwidth value in the first reference transmission parameter is greater than the third bandwidth value in the to-be-selected transmission parameter, and/or a fourth antenna quantity in the first reference transmission parameter is greater than the third antenna quantity in the to-be-selected transmission parameter, and/or an order of a fourth MCS in the first reference transmission parameter is greater than the order of the third MCS in the to-be-selected transmission parameter, the second bandwidth value in the second transmission parameter is equal to the fourth bandwidth value, and/or the second antenna quantity is equal to the fourth antenna quantity, and the order of the second MCS is equal to the order of the fourth MCS; and
when the fourth bandwidth value is less than the third bandwidth value, and/or the fourth antenna quantity is less than the third antenna quantity, and/or the order of the fourth MCS is less than the order of the third MCS, the second bandwidth value in the second transmission parameter is equal to the third bandwidth value, and/or the second antenna quantity is equal to the third antenna quantity, and the order of the second MCS is equal to the order of the third MCS.

22. The method according to any one of claims 12 to 21, wherein after sending, by the second electronic device, the acknowledgement message to the first electronic device, the method further comprises:
receiving, by the second electronic device, data sent by the first electronic device based on the second transmission parameter.

23. A transmission parameter switching system, comprising a first electronic device and a second electronic device, wherein
after the second electronic device establishes a wireless fidelity Wi-Fi connection to the first electronic device, the second electronic device is configured to send transmission information to the first electronic device based on a first transmission parameter, wherein the transmission information comprises reference information or a first reference transmission parameter, the reference information comprises one or more of a service scenario, a traffic feature, a channel status, and instant messaging performance between the second electronic device and the first electronic device, and the first reference transmission parameter comprises a transmission parameter determined by the second electronic device based on the reference information;
the first electronic device is configured to: receive, based on the first transmission parameter, the transmission information sent by the second electronic device, and determine a second transmission parameter based on the transmission information and sensed information of the first electronic device, wherein the sensed information comprises one or more of a service scenario, a traffic feature, a channel status, and instant messaging performance of the first electronic device, and a device status of the first electronic device;
the first electronic device is configured to send the second transmission parameter to the second electronic device;
the second electronic device is configured to send an acknowledgement message to the first electronic device after receiving the second transmission parameter sent by the first electronic device, wherein the acknowledgement message indicates that the second electronic device successfully receives the second transmission parameter; and
the first electronic device is configured to send data to the second electronic device based on the second transmission parameter.

24. A first electronic device, comprising one or more processors, one or more memories, a transceiver, and a wireless fidelity Wi-Fi chip, wherein the transceiver, the Wi-Fi chip, and the one or more memories are coupled to the one or more processors, the one or more memories are configured to store computer program code, the computer program code comprises computer instructions, and when the one or more processors execute the computer instructions, the first electronic device is enabled to perform the method according to any one of claims 1 to 11.

25. A second electronic device, comprising one or more processors, one or more memories, a transceiver, and a wireless fidelity Wi-Fi chip, wherein the transceiver, the Wi-Fi chip, and the one or more memories are coupled to the one or more processors, the one or more memories are configured to store computer program code, the computer program code comprises computer instructions, and when the one or more processors execute the computer instructions, the second electronic device is enabled to perform the method according to any one of claims 12 to 22.

26. A computer-readable storage medium, wherein the computer-readable storage medium stores instructions, and when the instructions are run on a computer, the computer is enabled to perform the method according to any one of claims 1 to 11 or 12 to 22.

27. A chip, applied to a first electronic device or a second electronic device, comprising a processing circuit and an interface circuit, wherein the interface circuit is configured to receive code instructions and transmit the code instructions to the processing circuit, and the processing circuit is configured to run the code instructions to perform the method according to any one of claims 1 to 11 or 12 to 22.
